# EUROPEAN PATENT APPLICATION

(11) **EP 3 871 865 A1**
(43) Date of publication of application: **01.09.2021**
(21) Application number: 19168740.9
(22) Date of filing: 11.04.2019
(51) Int. Cl.: B29D 11/00

(54) **METHOD OF MANUFACTURING A LENS WITH AN EMBEDDED FOIL**

(71) Applicant: Interglass Technology AG, 6312 Steinhausen (CH)
(72) Inventor: The designation of the inventor has not yet been filed
(74) Representative: Kilburn & Strode LLP

(57) **Abstract**

A lens with an embedded foil is produced, comprising the steps of providing a first mold and a second mold, providing a functional foil, positioning and attaching (10) the functional foil on the first mold, aligning (20) the second mold relatively to the first mold, sealing (30) the mold cavity between the first mold and the second mold, and filling (50) a curable monomer mixture into the mold cavity, wherein either the molds are heated before the alignment step or the molds are heated after the sealing step and the following filling step (50) is conducted with a heated monomer, or the heating of the molds follows the filling step (50) of the UV curable monomer, followed by a UV curing step (60) of the heated UV curable monomer mixture within the heated mold cavity.

## Description

### TECHNICAL FIELD

The present invention relates to a method of manufacturing a lens with an embedded functional film, comprising a first mold with attached film, a second mold, a sealing element, and a UV curable monomer mixture.

### PRIOR ART

WO 2018/087011 describes a method of manufacturing a lens with an embedded functional foil, comprising the steps of: providing a first mold, providing a second mold, providing a foil, positioning and attaching the foil in a predetermined distance from the first mold, aligning the second mold relatively to the first mold, sealing the mold cavity between the first mold and the second mold, filling a curable monomer mixture into the mold cavity, followed by a UV curing step of the heated UV curable monomer mixture within the heated mold cavity.

US 6,572,794 discloses a method of manufacturing a photochromic molded article comprising the steps of filling a mold with a photopolymerizable monomer composition containing a photopolymerizable monomer, a photoinitiator and a photochromic compound capable of coloring upon UV irradiation; pre-heating the composition to a temperature which reduces or prevents coloration of the photochromic compound during the subsequent photopolymerization step; and photopolymerizing the composition under irradiation with a light comprising a UV portion and a UV-visible portion. The polymerization rate under UV radiation is increased.

Cantoro et al. had reported in "Effect of pre-cure temperature on the bonding potential of self-etch and self-adhesive resin cements", Dental Materials 24 (2008) 577-583, that the bond strength of UV curable methacrylate-based resins is significantly improved when pre-heated before UV curing for dental applications.

### SUMMARY OF THE INVENTION

Embedding of functional films into cast elements, such as ophthalmic lenses, are accompanied by a plurality of technical problems whereas two main problems may occur:
There is an insufficient adhesion between the lens material and the functional film. The adhesion of the functional film may be improved by a surface treatment, such as plasma or corona activation, VUV treatment, or application of a primer, but especially for thin lenses the adhesion might still not be sufficiently strong. In the prior art, better adhesion is achieved with a surface treatment at thick lens portions due to the exothermal reaction heat which results in a higher rise in temperature for thick lens portions compared to thin lens portions.

The second issue encountered when functional films are introduced into lens material is the formation of fingering or Saffman-Taylor instabilities causing cosmetic defects. This is especially a problem for prescription lenses with a local difference in lens thickness; then cosmetic defects may occur at the interface of the film to the lens material at a stage of polymerization when a liquid monomer layer still exists at the film surface, while the bulk of the lens volume is already cured to a solid state. With curing, the monomer shrinks and the absolute shrinkage is higher at thick portions of the lens. This results in a pull-effect at the still liquid interface between the cured bulk material of the lens and the embedded film and gas protrudes in this liquid film leading to fingering or Saffman-Taylor instability defects that resemble flowers or snowflakes.

The invention is based on the insight that the insufficient quality of the currently fabricated lenses is due to the use of traditional curing method starting with a cold, environment temperature monomer. When, instead of that the curing process is using a pre-heating of UV-curable monomer for embedding functional films, it was found out that the fingering or Saffman-Taylor instability related cosmetic defects diminished and the adhesion of the functional film to the then cured monomer was greatly enhanced.

A method for producing a lens with an embedded foil according to the invention comprises the initial preparation steps of: providing a first mold, providing a second mold, providing a functional foil, positioning and attaching the functional foil on the first mold, aligning the second mold relatively to the first mold, sealing the mold cavity between the first mold and the second mold, and filling a curable monomer mixture into the mold cavity. The method comprises a heating step. This heating step can be realized with several alternatives, objectively reaching the same effect. These are:
(A) the molds are heated to a mold temperature T_{cv,a} before the alignment step is executed, or
(B) the molds are heated to the mold temperature T_{cv,b} after the sealing step and the following filling step is conducted with a heated monomer heated to a monomer temperature Tₘₒₙ, or
(C) the heating of the molds including the mold cavity to the mold temperature T_{cv,c} follows the filling step of the UV curable monomer.
Finally, the method concludes with a UV curing step of the heated UV curable monomer mixture within the heated mold cavity.

It is noted that the heated mold temperature can be equal or different in the different heating scenarios. Therefore, the heated mold temperature is noted in alternatives (A), (B) and (C) T_{cv,a}, T_{cv,b} and T_{cv,c}, respectively. A higher temperature T_{cv,a} is chosen compared to T_{cv,b}, to compensate the cooling during the sealing step. Within the present specification T_{cv} is used instead of T_{cv,a}, T_{cv,b} and T_{cv,c}, when only the specific embodiment is described but the principles apply to all embodiments or when the description is related to other steps which just rely on a heated mold and mold cavity at temperature T_{cv,} where no specific alternative is mentioned as preferred.

Furthermore, in a further embodiment of alternative (A), a heated monomer is filled in to avoid a higher temperature drop during filling.

In alternative (C), the molds are heated to heat the encompassed mold cavity with the already filled in monomer and foil, wherein the monomer as well as the foil is also directly heated, since they absorb IR radiation.

The heating has already a positive effect if the monomer mixture exceeds room temperature. However, best results are achieved if the monomer is pre-heated to a temperature that allows exceeding the glass transition temperature T_{g} of the foil material during UV curing (T > T_{g}), considering the further temperature rise due to the exothermal heat of the chemical reaction at the thinnest portion of the lens.

Therefore, a preferred method works with the heated mold temperature T_{cv} before the UV curing step predetermined in such a way that it allows exceeding the glass transition temperature T_{g} of the foil material during UV curing, i.e. T > T_{g} at the time of the curing step. Although the heated mold temperature T_{cv} is mentioned here and in the specification, it is of course the temperature of the monomer prior to the curing which is paramount for the quality of the produced lens, preferably based on a combination of preheating of the molds as such and a preheating of the monomer prior to the filling or during the filling (e.g. in the inlet conducts).

For example, in order to embed a 375 µm thick PMMA foil with a T_{g} of 105°C, it is sufficient to pre-heat the monomer mixture to 60°C to exceed 105°C for a lens with a thickness of 2 mm applying a UV curable methacrylate-based monomer mixture.

The monomer can be heated before the filling step or already filled in, to the monomer temperature Tₘₒₙ between 40 and 70°C.

The molds can be heated, before the filling step or with the already filled in monomer mixture, to the mold temperature T_{cv} between 30 and 110°C.

The heating of the molds with the attached foil or the assembled mold cavity can be effected by IR radiators or by directly heating the mold material with inlaid heating elements.

A disassembling step can be provided after the UV curing step to disassemble the molds and to obtain the produced lens with the embedded functional film.

After the curing step, a post-curing step can be provided to allow the temperature of the molds decrease to and hold especially at an intermediate temperature lower than the glass temperature T_{g} but higher than the initial heated mold temperature T_{cv}, especially between 90 and 100°C, especially at 95°C, before the disassembling of the molds takes place. In other embodiment, especially depending on the foil material, this intermediate temperature could also be easily above the T_{g} of the foil material.

A pause step of a predetermined time period, especially a time period between 1 to 10 minutes, can be provided when the method has produced a heated mold at mold temperature T_{cv} with filled-in heated monomer mixture at monomer temperature Tₘₒₙ before starting the UV curing step. Such a wait time can improve the adhesion, homogenize the temperature in the mold cavity (i.e. indirectly heating the foil via the monomer mixture and/or further heating the monomer via the molds), or the certain monomer components may even slightly chemically attack/etch the foil surface at the then elevated temperature.

Other embodiments of the invention are laid down in the dependent claims.

All embodiments as shown in the detailed specification show the following effects on the described technical problems:
Relating to the insufficient adhesion between the lens material and the embedded functional film, pre-heating the monomer prior to UV curing while encasing the embedded film achieves better adhesion. The pre-heating results in a higher reaction rate constant for the formation of covalent bonds between the emerging polymer network and the polymer film. The polymer film may be but not necessarily needs to be activated by a plasma, UV, VUV, corona or similar treatment before getting into contact with the heated monomer mixture.

Relating to the formation of fingering or Saffman-Taylor instability-related cosmetic defects, the pre-heating of the monomer resin results in a faster reaction of the liquid film that is formed at the polymer film surface. This either prevents the formation of the fingering or Saffman-Taylor instabilities or minimizes the time for the formation and growth of these defects due to the higher polymerization rate (Saffman-Taylor instability formation only possible while the liquid film still exists), leading to no or much smaller defects.

Any monomer known in lens production can be used, if the temperature requirements can be achieved. A possible monomer can be e.g. the monomer KOC® KY55 from Mitsui Chemicals, but also any other UV curable resin can be chosen as monomer.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a flowchart of a method according to a first embodiment of the invention;
- Fig. 2: shows a flowchart of a method according to a second embodiment of the invention; and
- Fig. 3: shows a flowchart of a method according to a third embodiment of the invention.
- Fig. 4: shows exemplary temperature profiles recorded in filled mold cavities with and without pre-heating and with and without wait time before UV curing and post-curing after UV curing.

### DESCRIPTION OF PREFERRED EMBODIMENTS

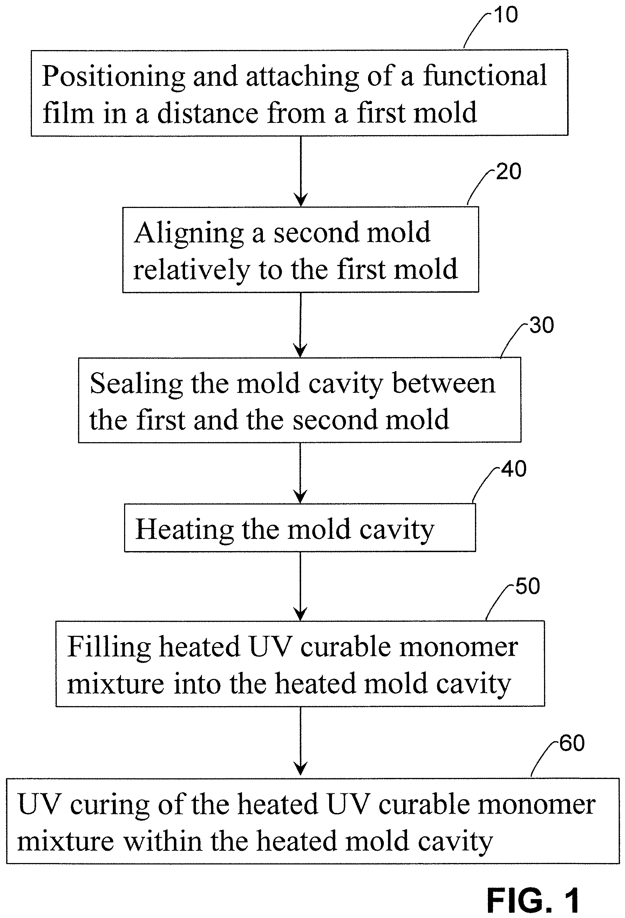

In order to minimize the mentioned fingering or Saffman-Taylor instability defects as well as to maximize adhesion of the functional film to the lens material, a manufacturing method according to a first embodiment of the invention is applied and Fig. 1 shows a flowchart of this method.

The first step is a positioning and attaching step 10 and comprises positioning and attaching of a functional film to one of the molds at a defined distance. This mold is traditionally named as first mold. The film can be applied to the first mold via attachment films or attachment dots as shown in WO 2018/087011 or US 2016/176131. It is only important that the distance between the film and the first and/or second mold is predetermined at any area section of the mold. It is also possible that e.g. circumference parts of the foil are in direct contact of one of the molds.

The second step is a mold alignment step 20 and comprises an alignment of the second mold relative to the first mold with the film. The third step is a sealing step 30 following the second step 20 and comprises the sealing of the mold cavity using tape, a gasket, or any similar sealing element. Then the foil is enclosed in the mold cavity in a predetermined space with predetermined distances at least in the central portion of the lens.

The fourth step is a mold heating step 40 and comprises heating the mold cavity. In order to heat the mold cavity, the temperature of the first mold and the temperature of the second mold is raised via IR radiators or a forced convection oven to a temperature of e.g. T_{cv} = 60 degree Celsius. As mentioned above, this heating to the temperature T_{cv} predetermined by convection oven has a positive effect already since the monomer mixture exceeds room temperature by about 35 to 40 degree Celsius. The additional effect triggers in when the temperature T of the heated monomer exceeds the glass transition temperature T_{g} of the foil material during UV curing e.g. T > T_{g}, considering the further temperature rise due to the exothermal heat of the chemical reaction at the thinnest portion.

The fifth step is a monomer filling step 50 and relates to the filling of heated UV curable monomer mixture into the heated mold cavity. This can be executed as shown in WO 2018/087011 or US 2016/176131. The heated UV curable monomer mixture is most preferably heated to the same temperature as the first mold and the second mold. The temperature of the monomer at the time of filling is preferably between ±10 K of the temperature of the molds. It is also possible to work with larger temperature differences between the molds/foil and monomer. However, in case the temperature differences become too large (> about 25 K), schlieren or flow marks are formed due to the density differences of the heated or cooled monomer.

The sixth step is a curing step 60, where the UV curing of the heated UV curable monomer mixture is taking place in the still heated mold cavity. This results in a further rise of the temperature due to the exothermal reaction heat depending on the monomer formulation and the (local) lens thickness.

After the curing process, the fabricated lens is either post-cured at elevated temperature to increase the degree of polymerization or directly extracted after opening of the mold and is allowed to cool down to room temperature. In any case it is possible to add an annealing process step, where the lenses are heated to elevated temperatures, preferably exceeding the glass transition temperature of the lens material, and cooled to room temperature at a defined rate. This reduces the generated stresses in the lens and increases the degree of polymerization especially if no post-curing was applied before.

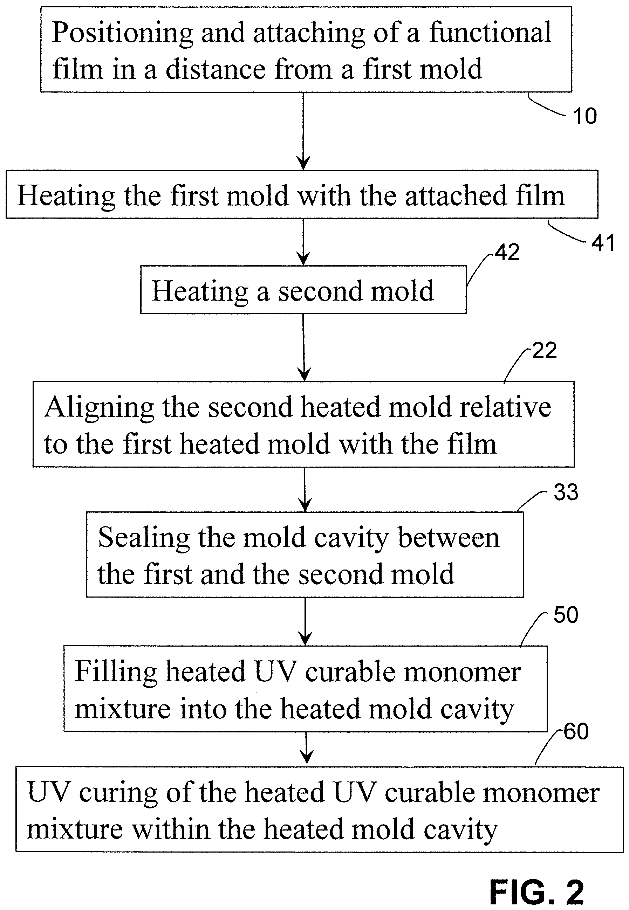

Fig. 2 shows a flowchart of a method according to a second embodiment of the invention.

The first step is the positioning step 10 with positioning and attaching of a functional film to one of the molds at a defined distance as in the first embodiment.

The second step comprises heating the first mold with attached foil in a first mold heating step 41 followed or performed in parallel by heating of the second mold in a second mold heating step 42. When the molds are both on the predetermined temperature, which can be the temperature as mentioned for the first embodiment, the third step, which is here the alignment step 22 follows, wherein the two heated molds are aligned relative to each other.

The fourth step encompasses here the sealing step 33 of the mold cavity using a tape or gasket when the mold is heated on the predetermined temperature. Otherwise, it is identical to the step of the same name (and similar reference numeral) as in the first embodiment.

The fifth step comprises the filling of heated UV curable monomer mixture into the heated mold cavity as in the first embodiment. The heated UV curable monomer mixture is heated to the same temperature as the first mold and the second mold or to temperatures as mentioned within the first embodiment.

The sixth step is the curing step 60 as in the first embodiment.

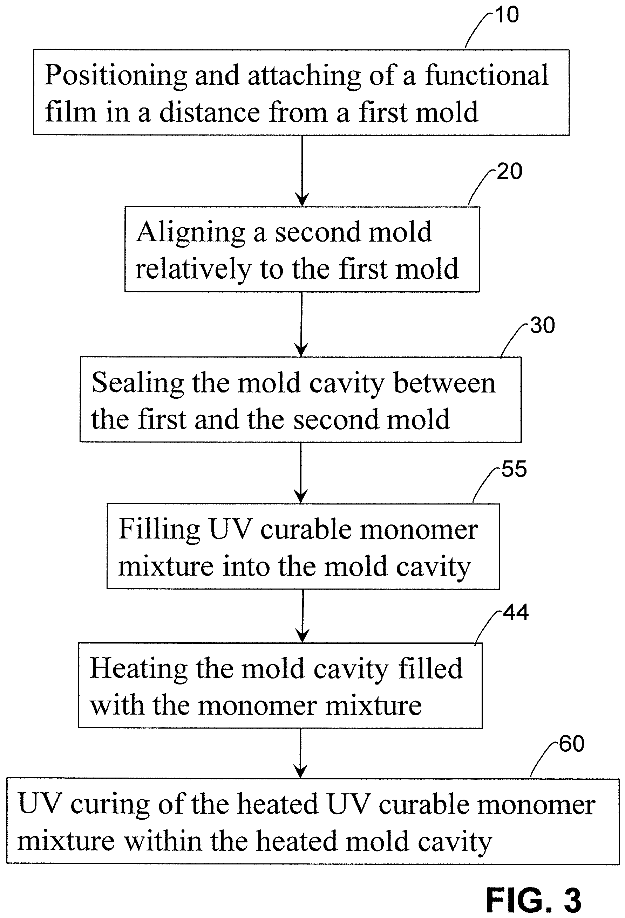

Fig. 3 shows a flowchart of a method according to a third embodiment of the invention.

The positioning and attaching step 10, the mold alignment step 20 as well as the sealing step 30 following the second step are executed as in the first embodiment.

The fourth step is a cold monomer filling step 55 and relates to the filling of the UV curable monomer mixture still at room temperature into the cold mold cavity; wherein cold means room temperature (25°C) as well. Alternatively, the monomer mixture can be filled in the cold mold cavity at an elevated temperature below the limit of schlieren or flow mark formation. Accordingly, the monomer temperature should be smaller than approximately 50°C in order to keep the temperature difference smaller than 25 K. Heating the monomer before filling has the additional advantage of a reduced monomer viscosity, allowing faster filling especially when a foil is applied in the mold cavity.

The fifth step is the filled mold heating step 44 and comprises heating the mold cavity with the filled in monomer. This can be achieved by all known heating techniques, such as radiation, convection, by applying a heat transfer fluid, or microwave heating. A simple, economic, and fast method is to move the filled mold between IR radiators and keep it there for a pre-defined time. The power of the radiators is controlled to reach a predefined temperature measured by a thermocouple between the radiators.

The sixth step is a curing step 60 as in the other embodiments.

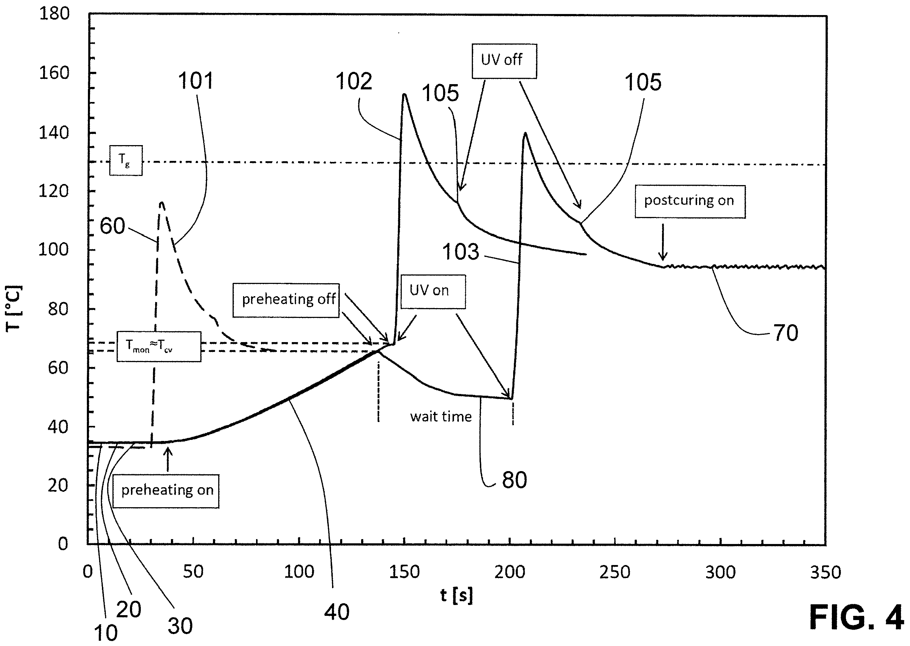

Fig. 4 shows three exemplary temperature profiles 101, 102 and 103 recorded in filled mold cavities with and without pre-heating and with and without wait time before UV curing and an optional post-curing after UV curing.

Broken line 101 shows the case of filling in the monomer and direct curing which is the prior art approach. Full line 102 shows the case of pre-heating the molds (and/or the monomer) and a subsequent direct UV-curing and full line 103 shows the case of pre-heating the molds (and/or the monomer) and providing a subsequent waiting time 80 before triggering the UV-curing. Only for the third curve 103 the temperature line over time is extended into a postcuring time 70, which can of course be also applied for curve 102.

The reference numerals 10, 20 and 30 are used to show the sequence of positioning step 10, mold alignment step 20 and sealing step 30 according to the preparation of the molds with the exception of above mentioned alternative (A) where the molds are heated to a mold temperature T_{cv,a} before the alignment step 20 is executed. In this case, reference numeral would be introduced after ending of the preheating step 40. But with these two exemplary curves 102 and 103 for embodiments according to the invention (whereas curve 101 shows a prior art curve), it is clear that the steps 20 and 30 are then executed after the temperature rise according to reference numeral 40 and before the waiting time 80 or the UV-cure in curve 102 sets in. The filling then also takes places at the appropriate time as explained above, e.g. between turning off the preheating and turning on the UV cure, or before the waiting time step 80 is considered to have begun.

In the direct curing procedure according to curve 101, the temperature of the molds, the mold cavity with the filled in monomer and the foil will not exceed the glass transition temperature T_{g} of the foil material during UV curing. After turning the UV curing lamps off, the temperature drops and will finally reach room temperature. It is possible, although not preferred, that within an embodiment of the invention, the preheating and UV curing intensity is chosen such that the temperature rise will not cross the glass transition temperature T_{g} of the foil material.

The second curve 102 comprises a pre-heating step which sets in after the initial steps according to alternatives (B) or (C) of the above description. The molds are heated to a preheating temperature of about Tₘₒₙ or T_{cv} in preheating step 40 which can also be mold heating steps 41 and 42 or 44. Switching on the UV lamps to initiate the curing step which lasts until switching off the UV lamps at time 105, initially raises the temperature above the glass transition temperature T_{g} of the foil. Then the exothermic reaction has reached its peak of energy generation and allows the system to drop its temperature which eventually will reach room temperature (not shown in Fig. 4).

The third curve 103 shows a method comprising a pre-heating step which sets in after the initial steps according to alternatives (B) or (C) of the above description. The molds are heated to a preheating temperature of about Tₘₒₙ or T_{cv} in preheating step 40 which can also be mold heating steps 41 and 42 or 44. Switching on the UV lamps to initiate the curing step which lasts until switching off the UV lamps at time 105, initially raises the temperature above the glass transition temperature T_{g} of the foil. Then the exothermic reaction has reached its peak of energy generation and allows the system to drop its temperature which is then held at the post-curing temperature, and eventually will reach room temperature (not shown in Fig. 4).

The temperature scale is in line with an embodiment as disclosed within the different temperature intervals within the present description. The time scale provides an example wherein different time intervals can be extended or provided as short time periods. The preheating can be provided faster if higher heat is provided to the molds. The waiting time can be chosen longer or shorter than the shown 60 seconds. The postcuring time is maintained in the example at least for 80 seconds and preferably for 20 to 30 minutes. It is preferred not to reduce the further time to reach room temperature too much.

### EXAMPLES

The present invention is described in more detail by the following examples which are intended to illustrate but not to limit the scope of the invention.

### Example 1

Plano lenses of base curve 4 and 2.2 mm thickness were produced with an 80 mm diameter polycarbonate (PC) foil of 375 µm thickness (Makrofol DE1-1CG000000), embedded in the center of the lens. The foil was thermoformed according to the base curve of the lens, the foil surfaces were activated by exposure to VUV irradiation and the foil was then fixed at a defined distance of 0.8 mm to the front mold. By adding a back mold to the front mold/foil assembly a mold cavity was formed using a tape as sealing element. Preheated monomer of 40°C was filled in the mold cavity. The filled mold cavity was either cured directly with UV light or placed between two IR radiators (quartz radiator SQE 124 x 124, Freek GmbH) with a spacing of 150 mm for 30 s, operated constantly at 50% of their maximum power of 650 W prior to the curing with UV light.

The adhesion was tested according to a method based on ISO 15024 using a tensile-tester machine and double cantilever beam specimens to determine the adhesion of plastic composites in terms of the critical energy release rate. For this, rectangular samples were prepared with a defined pre-crack opening. The measured values for samples with no and with pre-heating prior to UV curing are reported the following table:

| | Critical energy release rate [J/m²] |
|---|---|
| no preheating | 14.4 ± 1.5 |
| preheating | 79.2 ± 5.7 |

It is observed that the adhesion is increased significantly by a factor of more than five by pre-heating the monomer and polymer foil for 30 s prior to UV curing.

**LIST OF REFERENCE SIGNS**

| | | | |
|---|---|---|---|
| 10 | positioning step | | |
| 20 | mold alignment step | 60 | curing step |
| 22 | mold alignment step (heated molds) | 70 | post-curing step |
| | | 80 | waiting step |
| 30 | sealing step | 101 | first curve (direct curing (no preheating)) |
| 33 | sealing step (heated molds) | | |
| 40 | mold heating step | 102 | second curve (preheating and curing) |
| 41 | heating first mold | | |
| 42 | heating second mold | 103 | third curve (preheating, waiting, curing and postcuring) |
| 44 | heating molds with cold monomer | | |
| 50 | monomer filling step | 105 | switch off time of UV lamps |
| 55 | monomer filling step (cold monomer) | | |

## Claims

1. A method for producing a lens with an embedded foil, comprising the steps of:
- providing a first mold,
- providing a second mold,
- providing a functional foil,
- positioning and attaching (10) the functional foil on the first mold,
- aligning (20, 22) the second mold relatively to the first mold,
- sealing (30) the mold cavity between the first mold and the second mold, and
- filling (50) a curable monomer mixture into the mold cavity,
- wherein either the molds are heated to a mold temperature (T_{cv}) (41, 42) before the alignment step (22) or the molds are heated to the mold temperature (T_{cv}) after the sealing step (33) and the following filling step (50) is conducted with a monomer heated to a monomer temperature (Tₘₒₙ), or the heating of the molds (44) including the mold cavity to the mold temperature (T_{cv}) follows the filling step (50) of the UV curable monomer,
- followed by a UV curing step (60) of the heated UV curable monomer mixture within the heated mold cavity.

2. The method according to claim 1, wherein the mold temperature (T_{cv}) and/or UV curing intensity and/or UV curing time is predetermined that allows exceeding the glass transition temperature (T_{g}) of the foil material during UV curing (T>T_{g}).

3. The method according to any one of claims 1 or 2, wherein the monomer is heated before the filling step or already filled in, to the monomer temperature (Tₘₒₙ) between 40 and 70°C.

4. The method according to any one of claims 1 to 3, wherein the molds are heated, before the filling step or with the already filled in monomer mixture, to the mold temperature (T_{cv}) between 30 and 110°C.

5. The method according to any one of claims 1 to 4, wherein the heating of the molds with the attached foil or the assembled mold cavity is effected by IR radiators.

6. The method according to any one of claims 1 to 5, wherein a disassembling step is provided after the UV curing step (60) to disassemble the molds and to obtain the produced lens with the embedded functional film.

7. The method according to claim 6, wherein, after the curing step (60) a post-curing step (70) is provided to allow the temperature of the molds decrease to and hold especially at an intermediate temperature lower than the glass temperature (T_{g}) but higher than the initial heated mold temperature (T_{cv}), specially at 95°C, before the disassembling of the molds takes place.

8. The method according to any one of claims 1 to 7, wherein, a pause step (80) of a predetermined time period, especially between 1 to 10 minutes, is provided when the method has produced a heated mold at mold temperature (T_{cv}) with filled-in heated monomer mixture before starting the UV curing step (60).
